# EUROPEAN PATENT APPLICATION

(11) **EP 3 748 750 A1**
(43) Date of publication of application: **09.12.2020**
(21) Application number: 19903941.3
(22) Date of filing: 02.09.2019
(51) Int. Cl.: H01M 8/0206

(54) **FUEL CELL METAL BIPOLAR PLATE**

(30) Priority: 29.12.2018 CN 201811639845
(71) Applicant: Shanghai Everpower Technologies Ltd., Shanghai 201206 (CN)
(72) Inventor: GAO, Yong, Shanghai 201206 (CN); ZHENG, Qinyong, Shanghai 201206 (CN)
(74) Representative: Richly & Ritschel Patentanwälte PartG mbB
(86) International application number: PCT/CN2019/103931
(87) International publication number: WO 2020/134160

(57) **Abstract**

The present invention relates to a metallic bipolar plate for a fuel cell includes a cathode plate (1) and an anode plate (3), each stamped from an individual metal sheet. The cathode plate (1) has its front side formed with grooves making up an oxidant flow channel (16) and raised parts between the adjacent grooves form oxidant flow channel walls. The anode plate (3) has its front side formed with grooves making up a fuel flow channel (18) and raised parts defining the grooves form fuel flow channel walls. The raised parts at the front sides of the plates (1, 3) form grooves at their back sides, respectively, and the grooves at the front sides form ridges at the back sides. The plates (1, 3) are combined back to back so that the grooves and ridges at the back sides coupled to form a coolant flow channel (17) that has a groove-to-groove or groove-to-ridge structure. Compared with prior art, the bipolar plate of the present invention is compact, thin, desirably conductive, easy to process, economic, structural stable and properly sealed.

## Description

### BACKGROUND OF THE INVENTION

### 1. Technical Field

The present invention relates to fuel cells, and more particularly to a metallic bipolar plate for a fuel cell.

### 2. Description of Related Art

A fuel cell is a device that converts chemical energy of hydrogen and oxygen directly into electric energy by means of electrode reaction. A fuel cell is usually composed of a plurality of cell units, each comprising two electrodes (i.e. an anode and a cathode) that are separated by an electrolyte member and these cell units are connected in series to form a fuel cell stack. When the electrodes are supplied with proper reactants, by supplying one electrode with a fuel and supplying the opposite electrode with an oxidant, electrochemical reaction is activated to form potential difference between the electrodes, so as to generate electric energy.

In order to supply reactants to electrodes, a particular interface element called "bipolar plate" is set at each side of each individual cell. These bipolar plates are typically in the form of an individual member placed near the support of the anode or the cathode. Such a bipolar plate is essential to a fuel cell set. During operation of a resulting fuel cell stack, a bipolar plate provides the following functions to maintain the optimal performance and service life of the fuel cell stack: (1) it acts as a cell conductor with the cathode and anode formed at its two sides, respectively, so that individual cell units can be connected in series to form the fuel cell stack; (2) it provides reactive gas to electrodes through flow channels (mass transfer); (3) it coordinates water management and heat management, so as to prevent the cooling medium and the reactive gas from leakage; and (4) it provides the membrane electrode assemblies (MEAs) with structural strength support.

A metallic bipolar plate is constructed by soldering or binding a stamped cathode plate and a stamped anode plate each having a thickness of 0.07 mm - 0.7 mm together. The cathode plate has a pair of hydrogen inlet and outlet, a pair of air inlet and outlet, a pair of coolant inlet and outlet, and a groove-shaped oxygen flow channel. The anode plate has a pair of hydrogen inlet and outlet, a pair of air inlet and outlet, a pair of coolant inlet and outlet, and a groove-shaped hydrogen flow channel. Since the plates are quite thin, where they are bond using laser soldering, the two plates have to be precisely overlapped and pressed with each other. However, the large number of the foregoing grooves and holes on the plates leads to difficult alignment and even more difficult soldering. In addition, residual stress from stamping and soldering tends to cause warpage and deformation of the plates, which are lethal to the evenness of the resulting bipolar plate. On the other hand, when the plates are bond together using adhesive, the adhesive used has to meet demanding requirements or it tends to break when being subject to the high temperature of the operating fuel cell or thermal expansion of the metal sheets.

These defects can result in the following issues: 1) contact resistance between membrane electrodes and the bipolar plate, and 2) low mechanical stability of surface coating, both degrading performance and service life of the cell stack. Particularly, for a large-area bipolar plate, plates with low strength can easily warp or deform during subsequent processing procedures, such as surface treatment and assembling.

### SUMMARY OF THE INVENTION

The objective of the present invention is to address the shortcomings of the above-mentioned prior art by providing a metallic fuel cell bipolar plate featuring low contact resistance, good conductivity, convenient processing and easy assembling.

The foregoing objective of the present invention may be realized by using the following technical scheme. A metallic bipolar plate for a fuel cell comprises a cathode plate and an anode plate each made of a metal sheet through stamping. The cathode plate has a front side provided with grooves formed during the stamping that act as an oxidant flow channel, with raised parts that are formed between adjacent said grooves acting as oxidant flow channel walls. The anode plate has a front side thereof provided with grooves formed during the stamping that act as a fuel flow channel, with raised parts that are formed between adjacent said grooves acting as fuel flow channel walls. The raised parts at the front sides of the cathode and anode plates form grooves at back sides of the plates, respectively. The cathode plate and the anode plate are closely combined in a back-to-back manner. The grooves and ridges at the back sides of the plates are such designed in terms of width, depth and direction that they can form the coolant flow channel directly. The cathode plate and the anode plate are back-to-back combined by means of a frame-shaped gasket sandwiched between frames of the plates and a binding array between pressed points of the two plates. The grooves and the ridges at the back sides of the two plates, when coupled, jointly form the coolant flow channel having a groove-to-groove or groove-to-ridge structure, thereby constructing the bipolar plate having three flow channels from the two plates. This means the oxidant flow channel or fuel flow channel at the front side of the individual metal sheet is designed with consideration of the cooling flow channel at the back side. In particular, the individual metal sheet is formed with parallel raised parts at its front side, and the grooves between adjacent raised parts act as the flow channel. The raised parts at the front side are grooves at the back side, which form the oxidant flow channel and the fuel flow channel at the front sides of the cathode plate and the anode plate groove, respectively. The raised parts (i.e. ridges) at the front side form grooves at the back side. The two plates have the grooves at their back sides corresponding to each other. The grooves are combined at their openings to form the coolant flow channel. The grooves at the front side form raised parts (i.e. ridges) at the back side. The two plates are combined through binding or soldering with the raised parts (i.e. ridges) at their back sides contacting each other. In the cathode plate and the anode plate, at the fluid inlet and outlet and in areas where the flow channels corner or intersect at the back sides, it may be the case where a tract of combination of ridges is formed, leading to blockade of the coolant flow channel. Thus, the flow channels at the front sides are designed with consideration of the flow channels at the back sides. When the two plates are back-to-back combined, at least one sides of each plates (the back side of the cathode plate or the back side of the anode plate) is grooved, so as to ensure smooth pass of the entire coolant flow channels. In other words, the ridges or the grooves in these regions have variable widths. In order to prevent blockade of the coolant flow channel, the width of the grooves or the ridges of at least one side may be increased.

The back side of the cathode plate and the back side of the anode plate are closely combined by, for example, a binding or soldering binding array. The two plates are such back-to-back combined in to a unity that the grooves formed by the raised parts at the front side are correspondingly combined, thereby together constructing the coolant flow channel. After the coolant flow channel walls at the back sides of the two plates are aligned atop, the plates are back-to-back closely combined, thereby forming the bipolar plate having three flow channels, compact structure, good conductivity, and reduced contact resistance between the plates.

The cathode plate and the anode plate each have a reaction zone in the central region of its front side, and a sealing zone formed around the reaction zone. The said sealing zones of the bipolar plate are flat and free of any sealing groove except for where flow-guiding grooves are formed. The sealing zone may have a polished surface, a rough surface or an adhesive-coated surface, depending on the selection of the sealing material. Each of the cathode plate and the anode plate has its surfaces at the front side and back side provided with electrically-conductive and anti-corrosion coating. The coating may be applied before or after the stamping. The coating material may be metallic or non-metallic.

The bipolar plate has an oxidant inlet, an oxidant flow-guiding groove, an oxidant outlet, a fuel inlet, a fuel flow-guiding groove, a fuel outlet, a coolant inlet, a coolant flow-guiding groove, and a coolant outlet. The cathode plate has its front side provided with the oxidant flow-guiding grooves and the oxidant flow channel connecting the oxidant inlet and the oxidant outlet. The anode plate front side has its front side provided with the fuel flow-guiding grooves and the fuel flow channel connecting the fuel inlet and the fuel outlet. The coolant flow-guiding grooves and the coolant flow channel are formed between the back sides of the cathode and anode plates and are connecting the coolant inlet and the coolant outlet.

The peripheral regions at the front and back sides of the combined cathode and anode plates act as sealing zones. The cathode plate has the sealing zone at its front side provided with a sealing gasket a, while the anode plate has the sealing zone at its front side provided with a sealing gasket b. A frame-shaped gasket is received in the sealing zones at the back sides of the combined cathode and anode plates, in which the cathode plate and the anode plate are sealingly attached to two sides of the frame-shaped gasket through adhesion or soldering so as to form the bipolar plate.

The frame-shaped gasket is made of silicone, PP or the metal of the same material as the metallic bipolar plate that eliminates thermal stress during thermal expansion of the bipolar plate. By doing so, even if the adhesive used at the two sides is a normal adhesive, it will not cause the adhesive to break due to excessive thermal stress.

A coolant flow field is formed between the combined cathode and anode plates, and a frame-shaped hollow space is formed around the coolant flow field. The gasket is fit into the frame-shaped hollow space so as to reduce the use excessive adhesive and make selection of the adhesive less difficult. The adhesive may be conductive or non-conductive, and the gasket is made of a material that can eliminate the thermal stress.

The frame-shaped gasket is of a rectangular structure and its two ends are provided with three inlets and three outlets corresponding to the cathode plate and the anode plate. Coolant flow-guiding grooves are formed inside the coolant inlet and the coolant outlet of the inlets/outlets of the frame-shaped gasket, and are made of a porous material or a corrugated plate that has a certain thickness, so that a coolant is allowed to enter the coolant flow channel frame-shaped gasket through the coolant flow-guiding grooves from the coolant inlet, and enter the coolant outlet from the coolant flow-guiding grooves at the opposite side before drained.

Each side of the frame-shaped gasket is provided with at least one sealant groove, respectively, which not only prevents adhesive from overflow when the plates are pressed together, but also enhances adhesion. The adhesive is applied to both sides of the frame-shaped gasket, and then the cathode plate and the anode plate are pressed against the two sides of the frame-shaped gasket, respectively, thereby forming the bipolar plate.

Neither the cathode plate nor the anode plate is designed with any sealing grooves, and sealing is achieved by the frame-shaped gasket and the sealing gasket. The frame-shaped gasket and the sealing gasket are each of a rectangular, frame-like structure, configured to be pressed between the plates and in the sealing zones at the two opposite sides.

As compared to the prior art, the present invention provides the following beneficial effects:

1. The flow channels (grooves) and flow channel walls (ridges) at the front and back sides of the cathode and anode plates are topologically designed to match each other and to ensure smooth pass from the inlets to the outlets at the front and back sides of the plates and even distribution of flow in the reaction zones.

2. Each of the cathode plate and the anode plate has its two sides free of any sealing grooves. This not only saves the effort for making grooves, but also reduces difficulty in the subsequent processing procedures. Since sealant is applied to two sides of the frame-shaped gasket but not filled into sealing grooves, the relatively large area of application makes the operation easy and precise without the trouble of adhesive overflow. The relatively large area of application also means that the plates of the bipolar plate are pressed to each other in a plane-to-plane manner, thereby reducing the risk of shifting and deformation and ensuring firm binding.

3. The hydrogen flow channel and the air/oxygen flow channel may have different or the same depth. The structure of the present invention is adaptive to various bipolar plate structures.

4. The flow field space for the coolant fluid may be directly formed by combining the stamped cathode and anode plates back to back, without using any filling material therebetween. The gasket is only filled into the peripheral hollow space defined by the design of the raised parts and the grooves of the cathode plate and the anode plate, so the structure is simple and light, yet effectively in eliminating thermal stress, thereby reducing difficult in binding the plates.

5. In the present invention, two individual metal sheets are stamped to form the three flow channels. The coolant flow channel is simply made by combining the grooves at the back sides of the cathode plate and the anode plate and sealing with the peripheral frame, without using any traditional sealing groove. No additional plate is used between the two plates that otherwise undesirably increases the overall height of the resulting bipolar plate. The only thing between the two plates is the frame-shaped gasket received in the peripheral hollow space formed between the stamped plates, so the thickness of the bipolar plate can be minimized.

### BRIEF DESCRIPTION OF THE DRAWINGS

FIG. 1 is an exploded view of a bipolar plate;
FIG. 2 is a schematic structural drawing of one side of a cathode plate of the bipolar plate;
FIG. 3 is a schematic structural drawing of the assembled bipolar plate;
FIG. 4 illustrates assembling of the bipolar plates and a membrane electrode;
FIG. 5 is a schematic structural drawing of one aspect of the coolant fluid inlet and outlet of the bipolar plate;
FIG. 6 is a schematic structural drawing of another aspect of the coolant fluid inlet and outlet of the bipolar plate;
FIG. 7 is a schematic cross-sectional view showing fluid inlets/outlets frames and flow-guiding grooves at the periphery of the bipolar plate;
FIG. 8 is a local schematic structural drawing of a further aspect of the coolant fluid inlet and outlet of the bipolar plate;
FIG. 9 is a local, side view of the bipolar plate;
FIG. 10 is a local schematic structural drawing of still another aspect of the coolant fluid inlet and outlet of the bipolar plate;
FIG. 11 is a local cross-sectional view of the bipolar plate showing how the flow channels and the flow channel walls are overlapped and interlaced; and
FIG. 12, taking the cathode plate of example, shows the reaction zone and the binding array.

### DETAILED DESCRIPTION OF THE INVENTION

The invention as well as a preferred mode of use, further objectives and advantages thereof will be best understood by reference to the following detailed description of illustrative embodiments when read in conjunction with the accompanying drawings.

### Embodiment 1

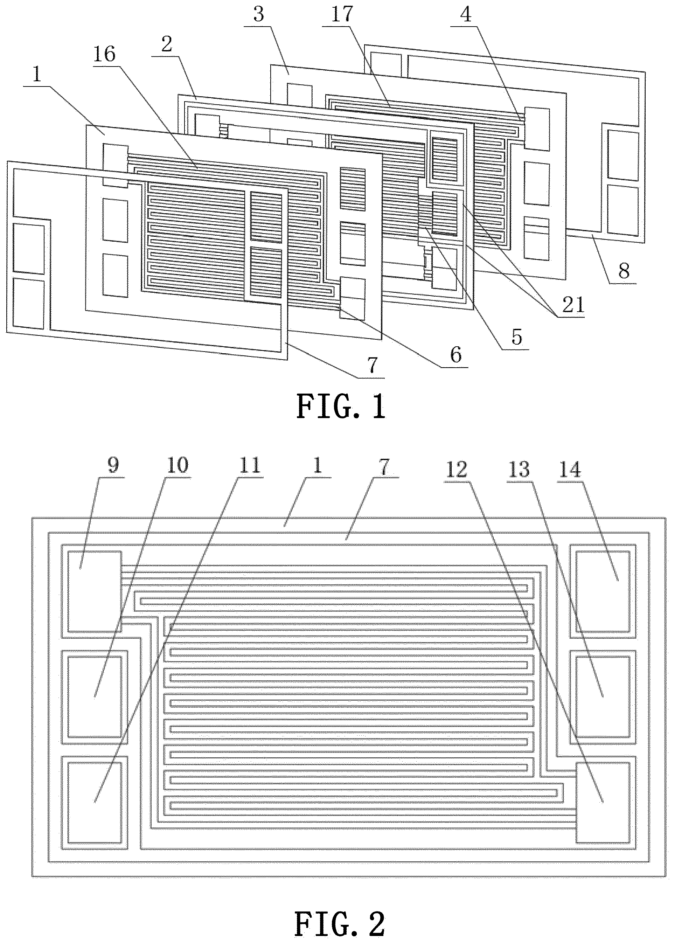

As shown in FIG. 1, which is an exploded view of a metallic bipolar plate of the present invention, the bipolar plate comprises a sealing gasket 7, a cathode plate 1, a frame-shaped gasket 2, an anode plate 3 and a sealing gasket 8 arranged in order. The cathode plate 1 and the anode plate 3 are not provided with any sealing groove. Instead, they are sealed together by means of the sealing gasket 7, the sealing gasket 8 and the frame-shaped gasket 2. The sealing gasket a7 and the sealing gasket b8 are each of a rectangular structure. When the bipolar plates are assembled with a membrane electrode, the sealing gaskets provide sealing effect.

FIG. 2 is a schematic diagram of the plane structure of the cathode plate, which is provided with three inlets and three outlets, including an oxidant inlet 9, oxidant flow-guiding grooves 6, an oxidant outlet 12, a fuel inlet 11, fuel flow-guiding grooves 4, a fuel outlet 14, a coolant inlet 10, coolant flow-guiding grooves 5, and a coolant outlet 13. The cathode plate 1 has its front side provided with an oxidant flow channel 16 connecting the oxidant inlet 9 and the oxidant outlet 12. The cathode plate 1 also has oxidant flow-guiding grooves 6 near the oxidant inlet and outlet. The anode plate 3 has its front side provided with a fuel flow channel 18connecting the fuel inlet 11 and the fuel outlet 14. Between the back sides of the combined cathode and anode plates 1,3, there are the coolant flow-guiding grooves 5 and a coolant flow channel 17connecting the coolant inlet 10 and the coolant outlet 13. In addition, the oxidant inlet 9 and the oxidant outlet 12 are jointed with the oxidant flow channel 16 at the fuel flow-guiding grooves 4.

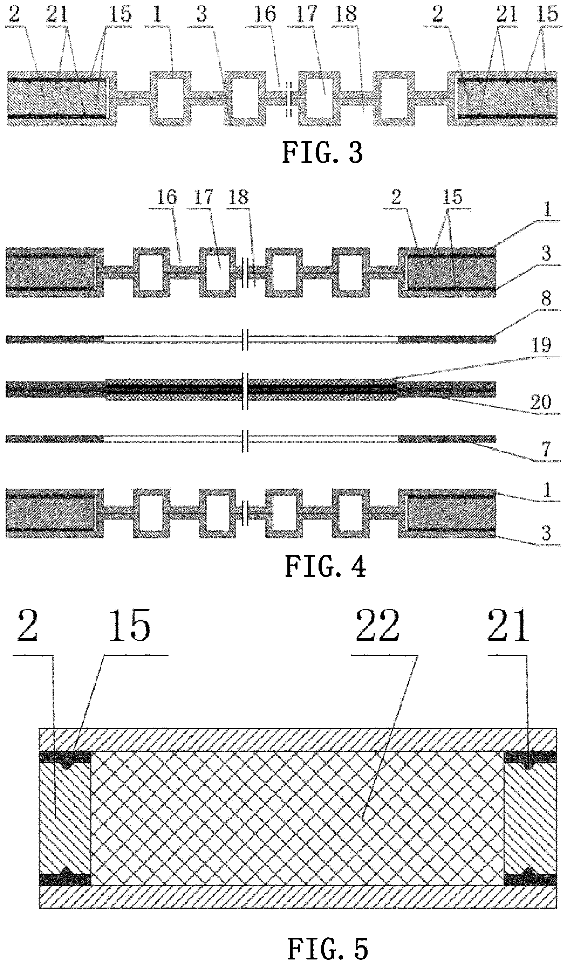

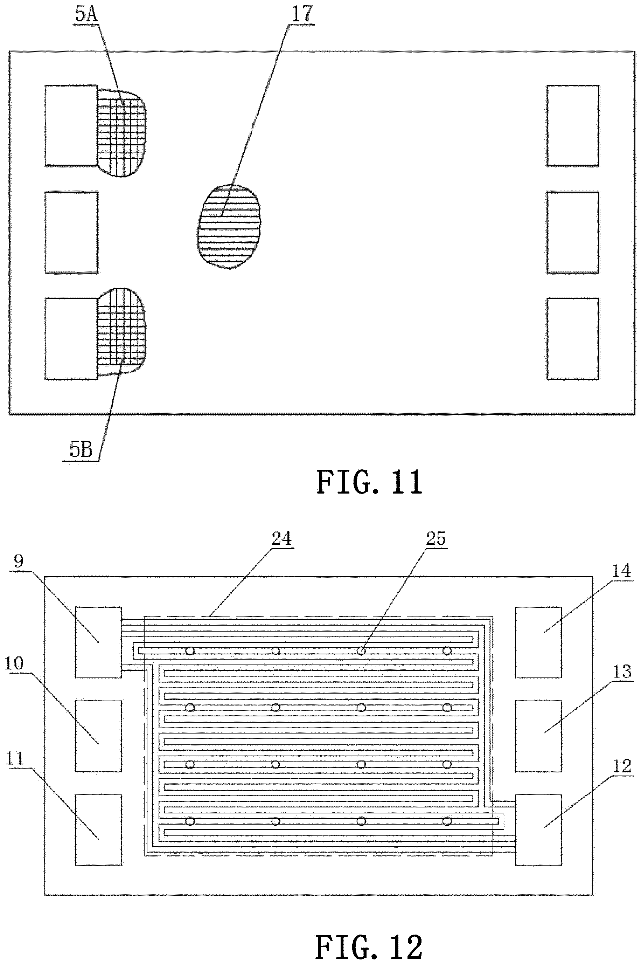

FIG. 3 shows the cathode plate 1 and the anode plate 3 each made of an individual metal sheet through stamping. At the front side of the cathode plate 1, the grooves formed during the stamping form the oxidant flow channel 16, and the raised parts that are formed between adjacent said grooves form oxidant flow channel walls. At the front side of the anode plate 3, the grooves formed during the stamping form the fuel flow channel 18, and the raised parts that are formed between adjacent said grooves form fuel flow channel walls. When the back sides of the cathode plate 1 and the anode plate 3 closely combined, the oxidant flow channel 16 and the fuel flow channel 18 are closely combined at their bottoms. At this time, the oxidant flow channel walls and the fuel flow channel wall jut out, and the grooves inside coupled to form the coolant flow channel 17. The grooves at the front sides of the cathode and anode plates 1, 3 act as the oxidant flow channel and the fuel flow channel, respectively. The raised parts at the front side form positionally corresponding grooves at the back side. When the two plates have the grooves at their back sides aligned with each other, the grooves can be combined at their openings to form the coolant flow channel. The grooves at the front side form positionally corresponding raised parts at the back side. After the two plates have the raised parts at their back sides aligned, they may be combines not only at the peripheral sealing zones, i.e. areas outside the dotted frame 24, but also at the binding array 25 through soldering (referring to FIG. 12 wherein the cathode plate 1 and the anode plate 3 each have a reaction zone at the central region of its front side, i.e. the area within the dotted frame 24, with the peripheral regions at the front and back sides forming sealing zones, i.e. the areas outside the dotted frame 24). The back sides of the two plates are such combined into a unity that the grooves formed by the raised parts at the front side are correspondingly combined, thereby together constructing the coolant flow channel 17. After the coolant flow channel walls at the back sides of the two plates are aligned atop, the plates are back-to-back closely combined, thereby forming the bipolar plate having three flow channels with two individual metal sheets, compact structure, good conductivity, and reduced contact resistance between the two plates.

The cathode plate 1 and the anode plate 3 are overlapped back to back, with the grooves on the anode plate 1 coupled with the grooves on the cathode plate 3, and the raised parts on the anode plate 1 aligned with the raised parts on the cathode plate 3, thereby forming a flow field 17 for the coolant fluid. A frame-shaped hollow space is formed peripherally and has a thickness equal to that of the coolant fluid flow field 17. Alternatively, the thickness of the frame-shaped hollow space is calculated by adding the sum of the depth of the oxidant flow channel 16 and the fuel flow channel 18 to the thickness of the two plates. The frame-shaped gasket 2 is fit in the frame-shaped hollow space. The peripheral regions of the cathode plate 1 and the anode plate 3 are sealing zones, i.e. the areas outside the dotted frame 24. The sealing zone at the front side of the cathode plate 1 is provided with a sealing gasket a7, and the sealing zone at the front side of the anode plate 3 is provided with a sealing gasket b8. The sealing zone between the back sides of the cathode plate 1 and the anode plate 3 is provided with a frame-shaped gasket 2. The cathode plate 1 and the anode plate 3 are sealingly adhered or soldered to two sides of the frame-shaped gasket 2 (adhered in the present embodiment) to form the bipolar plate. The sealing zones of the bipolar plate are flat and free of any sealing groove except for where flow-guiding grooves are formed. The sealing zone may have a polished surface, a rough surface or an adhesive-coated surface, depending on the selection of the sealing material for the sealing gasket a7 and the sealing gasket b8. Each of the cathode plate and the anode plate has each surface of its front and back sides applied with an electrically-conductive and anti-corrosion coating that is applied before stamping. The coating material may be an electrically-conductive, anti-corrosion metallic material.

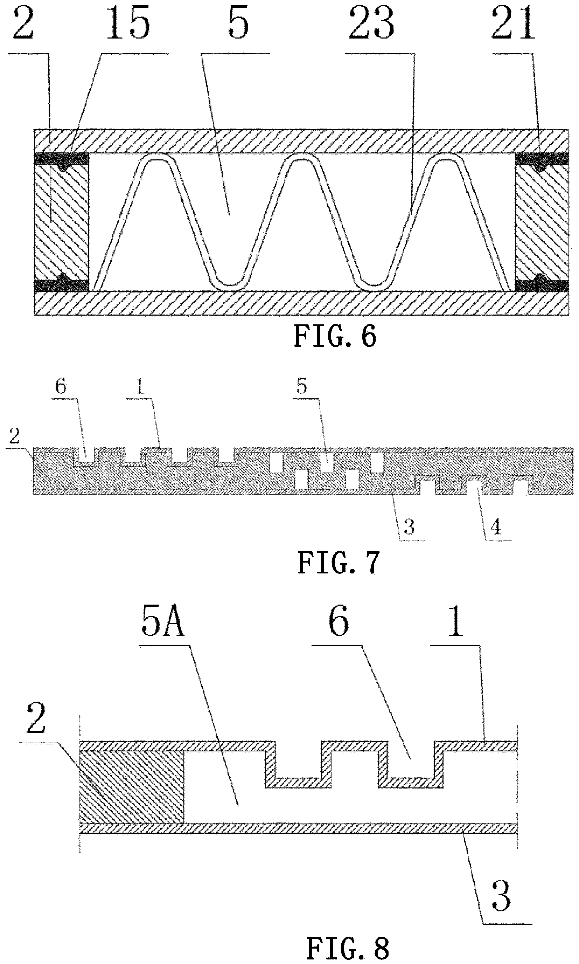

The frame-shaped gasket 2 is provided with at least one sealant groove 21 at each of its two sides, respectively, and the cathode plate 1 and the anode plate 3 are pressed onto the two sides of the frame-shaped gasket 2 that have been applied with adhesive 15, thereby forming the bipolar plate. The sealant grooves at the two sides of the frame-shaped gasket 2 not only prevent adhesive from overflow when the plates are pressed together, but also enhance adhesion. The frame-shaped gasket 2 is of a rectangular structure, and has its two ends provided with three inlets and three outlets corresponding to the cathode plate 1 and the anode plate 3. The coolant fluid inlet and outlet are provided therein with a plurality of parallel coolant flow-guiding grooves 5, facilitating introduction of the coolant fluid in to the coolant fluid flow field. FIG. 7 is a cross-sectional view of the periphery of the bipolar plate. The cathode plate 1 is provided with the oxidant flow-guiding grooves 6, and the anode plate 3 is provided with the fuel flow-guiding grooves 4. The frame-shaped gasket 2 has the interlaced coolant flow-guiding grooves 5.

As shown in FIG. 4, a membrane electrode is sandwiched between the two bipolar plates, which comprises an intermediate proton exchange membrane 20 flanked by a catalyst layer and a gas diffusion layer 19 at its two sides. Therein, the catalyst layer and the gas diffusion layer 19 each have an area equal to that of the flow fields on the cathode plate and on the anode plate. The membrane electrode has its two sides each provided with a connecting frame. The connecting frame has a variable thickness, which is at the center smaller than that of the membrane electrode, and at two ends equal to those of the sealing gasket a7 and the sealing gasket b8, respectively. This complementary design ensures the assembled product has an even overall thickness. The membrane electrode structure may be one disclosed structure in China Patent Application No. 2014107077112.

### Embodiment 2

As shown in FIG. 5, the coolant flow-guiding grooves 5 inside the coolant inlet and outlet on the frame-shaped gasket 2 are made of a porous material 22 having a thickness equivalent to that of the frame-shaped gasket. The coolant enters the coolant flow channel 17 through the porous material 22 from the coolant inlet 10 of the frame-shaped gasket 2, and enters the coolant outlet 13 from the porous material at the opposite side before drained.

The rest of Embodiment 2 is identical to Embodiment 1.

### Embodiment 3

As shown in FIG. 6, the coolant flow-guiding grooves 5 inside the coolant inlet and outlet of the frame-shaped gasket 2 are made of a corrugated plate 23 having a thickness equivalent to that of the frame-shaped gasket. The coolant enters the coolant flow channel 17 through the corrugated plate 23 from the coolant inlet 10 of the frame-shaped gasket 2, and enters the coolant outlet 13 from the porous material at the opposite side before drained. Each of the cathode plate and the anode plate has its front side and back side applied with electrically-conductive anti-corrosion coating, the coating is applied after stamping and the coating material is an electrically-conductive, anti-corrosion and non- metallic material.

The rest of Embodiment 3 is identical to Embodiment 1.

### Embodiment 4

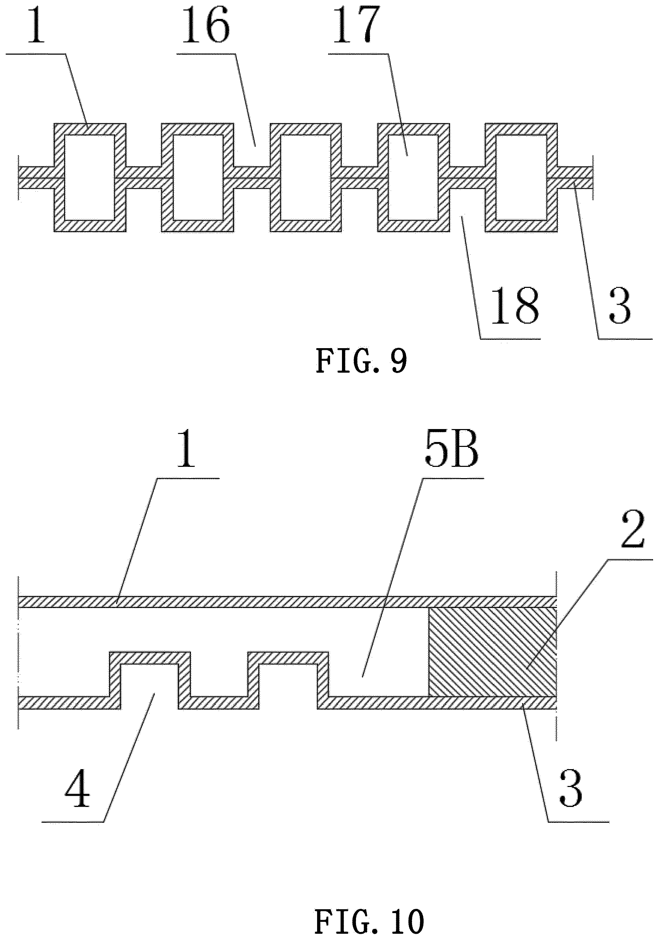

The oxidant flow channel or fuel flow channel at the front side of the individual metal sheet is designed with consideration of the cooling flow channel at the back side. In particular, the individual metal sheet is formed with parallel raised parts at its front side, and the grooves between adjacent raised parts act as the flow channel. The raised parts at the front side are grooves at the back side, which form the oxidant flow channel 16 and the fuel flow channel 18 at the front sides of the cathode plate 1 and the anode plate groove 3, respectively. The cathode plate 1 and the anode plate 3 are such back-to back combined that the ridges are aligned with the ridges and the grooves are coupled with the grooves. The oxidant flow channel 16 at the front side of the cathode plate 1 and the fuel flow channel 18 at the front side of the anode plate 3 contact each other at their bottoms. The raised parts (i.e. ridges) at the front side form grooves at the corresponding back side. The two plates have the grooves at their back sides corresponding to each other. The grooves are combined at their openings to form the coolant flow channel 17. The grooves at the front side form raised parts (i.e. ridges) at the back side. The two plates are combined through binding or soldering with the raised parts (i.e. ridges) at their back sides contacting each other, as shown in FIG. 9. In the cathode plate 1 and the anode plate 3, at the fluid inlet and outlet and in areas where the flow channels corner or interlace at the back sides, it may be the case where a tract of combination of ridges is formed, leading to blockade of the coolant flow channel. Thus, the flow channels at the front sides are designed with consideration of the flow channels at the back sides. When the two plates are back-to-back combined, at least one sides of each plates (the back side of the cathode plate or the back side of the anode plate) is grooved structure. As shown in FIG. 8, the oxidant flow-guiding grooves 6 at the inlet and outlet on the cathode plate 1 are formed as a rugged flow channel and the corresponding anode plate 3 is formed with an extended raised surface, so that the two jointly define coolant flow-guiding grooves 5A with one rugged side and one flat side. Alternatively, as shown in FIG. 10, the cathode plate 1 has an extended raised surface at the fluid outlet (i.e. the height of the anode plate here is equal to that of the two lateral walls of the oxidant flow channel), and the corresponding anode plate 3 has the fuel flow-guiding grooves 4 formed as a rugged flow channel, so that the two jointly define another type of coolant flow-guiding grooves 5B with one rugged side and one flat side, thereby ensure smooth pass of the entire coolant flow channel.

On the cathode plate 1 and the anode plate 3, at least one of the back sides of the fluid inlets/outlets and areas where the flow channels corner or intersect is of a grooved structure, so as to ensure smooth pass of the entire coolant flow channel 17. As shown in FIG. 11, the coolant flow-guiding grooves 5A and the coolant flow-guiding grooves 5B are interlaced at the back side of the fluid inlets/outlets. In other words, the grooves and ridges on the bipolar plate are not immutable instead complement each other. Each of the plates may have different designs as long as not only the flow channel at its front side but also the coolant flow channel formed at its back side allow smooth pass of flow.

### Embodiment 5

As shown in FIG. 12, it is a schematic diagram of a back side of a cathode plate. Therein, the raised parts at the front side of the cathode plate form grooves at the back side, respectively, and the grooves at the front side form ridges of the coolant flow channel at the back side. The anode plate is of the same design. When the two plates are combined back to back into a unity, the ridges at their back sides meet each other, with their contact surfaces soldered to form a binding array 25, thereby forming the bipolar plate. The binding array 25 may be alternatively realized by binding the ridges at the back sides of the two plates using adhere. The number of points in the binding array 25 may vary according to the desired structural stability and electric conductivity at the contact surfaces.

The cathode plate and the anode plate each have a reaction zone in the central region of its front side, respectively, i.e. the area within the dotted frame 24. The corresponding area at the back side is the main cooling flow field. The rest of Embodiment 5 is identical to Embodiment 1.

## Claims

1. A metallic bipolar plate for a fuel cell, **characterized in** comprising a cathode plate (1) and an anode plate (3) each made of an individual metal sheet through stamping, grooves formed by the stamping on a front side of the cathode plate (1) make up an oxidant flow channel (16), with raised parts between the adjacent grooves forming oxidant flow channel walls, grooves formed by the stamping on a front side of the anode plate (3) make up a fuel flow channel (18), with raised parts between the adjacent grooves forming fuel flow channel walls, the raised parts at the front sides of the cathode plate (1) and the anode plate (3) forming grooves at back sides of the plates, respectively, the grooves at the front side forming ridges between coolant flow channels at the back sides, the grooves and the ridges at the back sides of the two plates being coupled and forming the coolant flow channel (17) that has a groove-to-groove or groove-to-ridge structure, thereby constructing the bipolar plate having three flow channels formed by the two individual sheets.

2. The metallic bipolar plate for a fuel cell of claim 1, wherein the grooves at the front sides of the cathode plate (1) and the anode plate (3) form the raised parts at the back sides, so that when the two plates are closely assembled back to back, all or a part of the raised parts at the back sides are bonded into an unity through a binding array (25) by means of adhesion or soldering.

3. The metallic bipolar plate for a fuel cell of claim 1, wherein at least one of fluid inlets, fluid outlets, areas where the flow channels corner and areas where the flow channels interlace on the cathode plate (1) and the anode plate (3) has its back side formed as a grooved structure, so as to ensure smooth pass of the entire coolant flow channel (17).

4. The metallic bipolar plate for a fuel cell of claim 1, wherein the cathode plate (1) and the anode plate (3) each have a central region at the front side acting as a reaction zone, indicated by areas within a dotted frame (24), and have peripheral regions at the front and back sides acting as sealing zones, indicated by areas outside the dotted frame (24), the sealing zones of the bipolar plate are flat and free of any sealing groove except for flow-guiding grooves, and surface quality of the sealing zones is a polished surface, a rough surface or an adhesive-coated surface.

5. The metallic bipolar plate for a fuel cell of claim 1, wherein each of the cathode plate (1) and the anode plate (3) has each of its front and back sides applied with an electrically-conductive and anti-corrosion coating that is applied before or after the stamping, and the material of the coating is metallic or non-metallic.

6. The metallic bipolar plate for a fuel cell of claim 1, wherein the bipolar plate is provided with an oxidant inlet (9), an oxidant flow-guiding groove (6), an oxidant outlet (12), a fuel inlet (11), a fuel flow-guiding groove (4), a fuel outlet (14), a coolant inlet (10), a coolant flow-guiding groove (5), and a coolant outlet (13), in which the oxidant flow-guiding groove (6) and the oxidant flow channel (16) that connect the oxidant inlet (9) and the oxidant outlet (12) are located at the front side of the cathode plate (1), and the fuel flow-guiding groove (4) and the fuel flow channel (18) that connect the fuel inlet (11) and the fuel outlet (14) are located at the front side of the anode plate (3), while the coolant flow-guiding groove (5) and the coolant flow channel (17) that connect the coolant inlet (10) and the coolant outlet (13) are located in an interlayer formed between the fitted back sides of the cathode plate (1) and the anode plate (3).

7. The metallic bipolar plate for a fuel cell of claim 1, wherein a coolant flow field is formed between the assembled cathode plate (1) and the anode plate (3), and a frame-shaped hollow space is formed around the coolant flow field, in which the frame-shaped hollow space is filled with a frame-shaped gasket (2).

8. The metallic bipolar plate for a fuel cell of claim 1, wherein peripheral regions of the cathode plate (1) and the anode plate (3), indicated by areas outside a dotted frame (24), are sealing zones, and the cathode plate (1) has the sealing zone at its front side provided with a sealing gasket a (7), while the anode plate (3) has the sealing zone at its front side provided with a sealing gasket b (8), a frame-shaped gasket (2) is received in the sealing zones in the interlayer between the back sides of the cathode plate (1) and the anode plate (3), in which the cathode plate (1) and the anode plate (3) are sealingly attached to two sides of the frame-shaped gasket (2) through adhesion or soldering so as to form the bipolar plate, and in which the frame-shaped gasket (2) is provided with at least one sealant groove (21) at each of its two sides, the two sides of the frame-shaped gasket (2) are applied with adhesive (15), and the cathode plate (1) and the anode plate (3) are pressed onto the two sides of the frame-shaped gasket (2), thereby forming the bipolar plate.

9. The metallic bipolar plate for a fuel cell of claim 6, wherein the frame-shaped gasket (2) is made of silicone, PP or a metal of the same material as the metallic bipolar plate.

10. The metallic bipolar plate for a fuel cell of claim 6, wherein the frame-shaped gasket (2) is of a rectangular structure, whose two ends are provided with three pairs of inlets and outlets corresponding to the cathode plate (1) and the anode plate (3), in which coolant flow-guiding grooves (5) are formed inside a coolant inlet and a coolant outlet of the frame-shaped gasket (2), and are each made of a porous material (22) or a corrugated plate (23) that has a certain thickness, so that a coolant is allowed to enter the coolant flow channel (17) through the coolant flow-guiding grooves (5) from the coolant inlet (10) of the frame-shaped gasket (2), and enter the coolant outlet (13) from the coolant flow-guiding grooves (5) at the opposite side before drained.
